# EUROPEAN PATENT APPLICATION

(11) **EP 1 178 498 A1**
(43) Date of publication of application: **06.02.2002**
(21) Application number: 00917279.2
(22) Date of filing: 12.04.2000
(51) Int. Cl.: H01F 5/00, H01F 5/06, H02K 3/50, H01M 8/02, B29C 45/16, B29L 31/34

(54) **PRODUCT WITH CONDUCTING PARTS MADE OF HIGHLY CONDUCTIVE RESIN, AND METHOD OF MANUFACTURE THEREOF**

(30) Priority: 12.04.1999 JP 10455199
(71) Applicant: TOYOTA JIDOSHA KABUSHIKI KAISHA, Aichi-ken 471-8571 (JP)
(72) Inventor: Murakami, Katsuya, Toyota-shi, Aichi 471-8571 (JP); Kamata, Yuko, Toyota-shi, Aichi 471-8571 (JP); Kondo, Takeo, Toyota-shi, Aichi 471-8571 (JP); Ohtake, Tomoyuki, Toyota-shi, Aichi 471-8571 (JP)
(74) Representative: Leson, Thomas Johannes Alois, Dipl.-Ing.
(86) International application number: JP0002361
(87) International publication number: WO0062312

(57) **Abstract**

A product 1 having electrically conducting portions 7, 10 and 11, in which said electrically conducting portions are made of a highly conductive resin. The electrically conducting portions may be exemplified either by coils 2 or flat plates such as sepaxators for fuel cells or by electric contacts or portions for generating heat when energized by an electric power.

## Description

### TECHNICAL FIELD

This invention relates to a product provided with electrically conducting portions for an electric power or electric signals, such as a motor, a fuel cell, a communication device or an electric device, and relates to a manufacture method thereof.

### BACKGROUND ART

The electric power in the mode of energy is easy to handle, and the electric signals in the mode of signals are easy to handle. Therefore, the various machines or apparatus are made to be driven by the electric power, and the electric signals are used for controlling them. In order to feed the electric power or electric signals, there are essential the electrically conducting portions, for which a metal such as copper having a high electric conductivity (or a small volumetric resistivity) is frequently used generally in the prior art.

Where a metal such as copper is wired, it is ordinary to employ a conductor coated with an insulator or to employ a printed wiring applied to a substrate. For example, an enamel insulated wire is employed for the stator coil of a motor, and the stator is constructed by winding the enamel insulated wire around a core in which electromagnetic steel sheets are laminated. On the other hand, a printed substrate is constructed by drawing a circuit of a highly conductive metal such as copper in the back face of a predetermined insulating substrate and by forming through holes or sockets for mounting parts such as an LSI, a capacitors or transistors. For connecting the substrate with a liquid crystal display plate or a switch disposed on the outer surface of a casing, still moreover, there is used a flat cable gathering a multiplicity of copper wires.

Of these, the stator of the motor will be described in more detail. The stator is formed into a ring shape and provided with coils of a plurality of poles in its inner circumference because it arranges a rotor therein to generate an electromagnetic force between itself and the rotor. The coils of the individual poles are constructed by winding multiple layers of enamel insulated electric wires and made independent of each other, and the coils of a phase are connected with each other. Thus, the coils of the individual poles are arranged in the ring-shaped stator so that their manufacture workability is not always satisfactory. In the prior art, for example: the coils are formed by winding a conductor on a winding frame; the coils are transferred from the winding frame to the stator core; the insulations between the phases are simultaneously effected by using a sheet of insulating paper; and the contour is shaped. These works are all done in the parts having annular shapes so that they have to be generally made in manual manners. Next, terminals are attached to the end portions of the lead wires of the individual phases, and the finishing and shaping treatments of the entirety are made by inserting predetermined jigs from the axial two sides. Moreover, the portions, as protruded from the stator core, of the individual coils are fixed by an automatic bobbin, and the entirety is then fixed with a resin or varnish.

As the method for improving the production efficiency of the stator, there has been proposed in the prior art by Japanese Patent Laid-Open No. 6-105487 a method for constructing a stator by dividing a laminated iron core for individual poles, and insulating the divided pole teeth individually and winding a conductor on them, and then by combining the individual pole teeth into a ring shape.

In the method of the prior art for forming the coils for the individual poles on the aforementioned ring-shaped stator core, the individual poles have to be manually insulated or shaped so that the production efficiency cannot be improved. In the method described in the aforementioned Laid-Open, on the other hand, the coil is wound on the individual pole teeth so that the works including their insulations can be automated to raise the productivity. However, the manual works have to be incorporated into the later overall shaping or integration of the individual pole teeth, and the manufacture workability may be degraded in this point.

On the other hand, the delivery pipe of the engine will be described as an example of the product having other electrically conducting portions. In Japanese Patent Laid-Open No. 9-250420, there is described a delivery pipe which is made of a resin and which has lead wires insert-molded. These lead wires, as described in this Laid-Open, are manufactured by pressing out a metal sheet. The lead wires are fitted in grooves of a holder made of the resin and are set together with the holder in a molding die. After this, the body portion of the delivery pipe is formed by injection-molding the resin. Therefore, the lead wires, as fitted in the holder, are buried together with the holder in the pipe body portion and are insert-molded in the pipe body portion.

In this delivery pipe described in Japanese Patent Laid-Open No. 9-250420, the lead wires are insert-molded, although their rigidity is low, while being fitted in the holder of the resin. Therefore, it is possible to avoid the situation in which the lead wires are deformed and shorted during the injection molding operation of the pipe body portion. However, the lead wires have to be thin members of a low rigidity because they are buried in the pipe body portion. Therefore, difficult works are required for pressing out the lead wires, and the material yield is poor. Other difficult works are also required for setting the lead wires in the resin holder. As a result, although the pipe body portion can be easily injection-molded, the preceding works take many steps and a high cost, and the production can take a high cost.

These situations are similar to the case where another electric product is to be manufactured. The electrically conducting portions and the support portions or casing for mounting the former are required to have different items for their electric characteristics, strengths and materials. Therefore, it is frequent that each of the parts are individually prepared at different steps before they are finally combined to manufacture the product. Therefore, there were structural factors to degrade the production efficiency, for example, the necessity of the manual works in the assembling step.

This invention has been conceived on the background of the aforementioned situations and has an object to provide a product having electrically conducting portions and of an excellent productivity, and a method for manufacturing the product.

Another object of this invention is to make it possible to injection-mold the electrically conducting portions.

Still another object of this invention is to make the coil for a motor lightweight and to improve the productivity of the coil.

A further object of this invention is to improve the productivity of a separator for a fuel cell.

A further object of this invention is to make a fuel delivery pipe for an engine lightweight and to lower the cost for the fuel delivery pipe.

### DISCLOSURE OF THE INVENTION

In order to achieve the aforementioned objects, according to the invention of Claim 1, there is provided a product comprising electrically conducting portions, characterized in that said electrically conducting portions are made of a highly conductive resin.

In the invention of Claim 1, therefore, the electrically conducting portions are made of the resin so that the product having the electrically conducting portions can be made lightweight.

On the other hand, the invention of Claim 2 is characterized in that said electrically conducting portions are coils having an electric path formed helically on an axis for passing an electric current.

In the invention of Claim 2, therefore, the coils can be formed by the resin molding method such as the injection molding method thereby to improve the manufacture workability of the product having the electrically conducting portions.

In the construction described in Claim 1, the invention of Claim 3 is characterized: by comprising a plurality of parts having a multiplicity of linear electrically conducting portions made of a highly conductive resin and exposed at their two end portions to joint faces; and in that said parts are so jointed that the end portions of the electrically conducting portions, as exposed to the joint faces, are made electrically conductive with the end portions of the electrically conducting portions of mating parts thereby to form continuous coils.

In the invention of Claim 3, therefore, the coils or the helically continuous electric path for the electric current are formed by manufacturing the individual parts by the ordinary resin molding method and by jointing those parts. Therefore, there is improved the manufacture workability of the product having the coils.

In the construction described in Claim 2, the invention of Claim 4 is characterized in that said coils construct the stator or rotor of a motor.

In the invention of Claim 4, therefore, the stator or rotor of the motor is made lightweight, or its manufacture workability is improved.

In the construction described in Claim 1, the invention of Claim 5 is characterized: in that said electrically conducting portions are coils wound in multiple turns around a core arranged in the axial direction for forming an electric path; in that said coils are equidistantly arranged in the circumferential direction on said axis; and in that each of said coils includes: a body portion extending in parallel with said core and having a multiplicity of first electrically conducting portions insulated from each other and exposed at its two end portions to the two axial end joint faces; and end plate portions jointed to the two axial end portions of said body portion and having second electrically conducting portions insulated from each other and made electrically conductive to the exposed end portions of the first electrically conducting portions for connecting said first electrically conducting portions with one continuous circuit.

In the invention of Claim 5, therefore, the coils having the electrically conducting portions wound around the core can be obtained by jointing the end plate portions of the body portion thereby to improve the manufacture workability of the coils.

In the construction described in Claim 1, the invention of Claim 6 is characterized: in that said product is a separator made electrically conductive with one of two electrodes which are set across an electrolyte; and in that the portion, as made conductive with said electrode, of said separator is said electrically conducting portions made of the highly conductive resin.

According to the invention of Claim 6, therefore, at least one portion of the separator is made of the resin so that it can be made lightweight to reduce the weight of the fuel cell which is constructed by stacking a multiplicity of single cells.

In the construction described in Claim 1, the invention of Claim 7 is characterized: in that said electrically conducting portions are a separator for a fuel cell having electrodes arranged on its surface and arranged across an electrolyte; in that said separator is formed into a flat plate shape having a plurality of vent grooves formed on its two front and back faces and to the facial direction; in that said one face has an intake portion formed therein communicating with one end portion of each of said vent grooves formed in said one face, and an exhaust portion formed therein and communicating with the other end portion, whereas said other face has an intake portion formed therein and communicating with one end portion of each of said vent grooves formed in said other face and an exhaust portion formed therein and communicating with the other end portion.

In the invention of Claim 7, therefore, the separator for the fuel cell is made of the highly conductive resin. Even when the separator is specially complicated in shape by the vent grooves formed in its surface or back face and by the intake portion or the exhaust portion communicating with the vent grooves, it can be manufactured of the thermoplastic resin by the injection molding or extrusion molding method thereby to improve the manufacture workability.

According to the invention of Claim 8, there is provided a method for manufacturing a product with electrically conducting portions, characterized in that said electrically conducting portions are formed by pouring a highly conductive resin into a shape corresponding to said electrically conducting portions and then by causing the highly conductive resin to solidify.

In the invention of Claim 8, therefore, the electrically conducting portions are made of the highly conductive resin by the injection molding or extrusion molding method so that they can be easily formed to improve the manufacture workability of the product having the electrically conducting portions.

In the method of Claim 8, the invention of Claim 9 is characterized: in that said electrically conducting portions are formed in a plurality of parts to be jointed to each other and in a state in which the end portions are exposed to the joint faces of said parts; by pouring said highly conductive resin into a linear shape to solidify and in that said parts are so jointed that the end portions of the electrically conducting portions, as exposed to the joint faces, are made electrically conductive with the end portions of the electrically conducting portions of mating parts thereby to form continuous coils.

In the invention of Claim 9, therefore, the coils can be formed by forming the electrically conducting portions individually in predetermined shapes in the plurality of parts and then by jointing those parts to each other. Therefore, it is possible to improve the manufacture workability of the product having the coils.

In the method of Claim 8, the invention of Claim 10 is characterized by comprising: the step of inserting a multiplicity of linear members separately of each other into a molding cavity and dosing a molding die; the step of forming an insulating portion by injecting an electrically insulating resin into the cavity; and the step of forming said electrically conducting portions insulated from each other, by removing said linear members and closing the die again and then by injecting said highly conductive resin into a hollow portion formed by said linear members.

In the invention of Claim 10, therefore, the electrically conducting portions insulated from each other can be made by the injection molding method to improve the manufacture workability of the product having the electrically conducting portions therein.

In the invention of Claim 1, still moreover, the invention of Claim 11 is characterized in that the electrically conducting portions of said highly conductive resin are formed in the state of being buried in the surface layer of a body portion of a hollow or solid shaft shape.

In the invention of Claim 11, therefore, it is possible to make the product lightweight in which the electrically conducting portions are formed along the circumferential portion of the shaft-shaped body portion. On the other hand, the electrically conducting portions are made of the highly conductive resin so that they can be easily manufactured.

In the invention of Claim 11, the invention of Claim 12 is characterized: in that said body portion formed into a pipe shape and is provided at its predetermined portion with a connector portion having metal terminals; and in that said electrically conducting portions are made conductive with the metal terminals.

In the invention of Claim 12, therefore, it is possible to improve the manufacture workability of the product which has the electrically conducting portions around the pipe-shaped body portion and the connector portion for making the electrically conducting portions conductive to the outside.

In the invention of Claim 12, moreover, the invention of Claim 13 is characterized: in that said body portion is provided at its predetermined portion with a port portion for communicating with the inside of said body portion; and in that said connection portion is disposed in the vicinity of said port portion.

In the invention of Claim 13, therefore, it is possible to easily attach and remove the parts to be electrically driven or controlled and made to communicate with the body portion, to produce a product of an excellent manufacture workability, and to make the produce lightweight.

### BRIEF DESCRIPTION OF THE DRAWINGS

Fig. 1 is a perspective view of a stator of an example of this invention.
Fig. 2 is a sectional view of line II - II of Fig. 1.
Fig. 3 is a schematic perspective view of the stator.
Figs. 4 (A), (B), (C) and (D) are explanatory views showing a process for manufacturing a body portion of the stator.
Figs. 5 (A), (B) and (C) are explanatory views showing a process for manufacturing a cover portion of the stator.
Figs. 6 (A), (B) and (C) are explanatory views showing a process for manufacturing an insulating portion for the body portion of the stator by using a split core according to one example of the method of this invention.
Figs. 7 (A), (B), (C) and (D) are explanatory views showing a process for manufacturing the cover portion to be attached to the insulating portion.
Figs. 8 (A), (B), (C) and (D) are explanatory views showing a process for manufacturing the stator in combination with the split core.
Figs. 9 (A), (B), (C), (D), (E) and (F) are explanatory views showing a process for manufacturing the insulating portion for the body portion of the stator by using a lost core according to one example of the method of this invention.
Figs. 10 (A), (B), (C) and (D) are explanatory diagrams showing a process for manufacturing a stator in combination with the split core which is obtained at steps shown in Figs. 9 (A) to (F).
Figs. 11 (A) and (B) are perspective views showing one example of a fuel cell separator according to one example of this invention.
Fig. 12 is a schematic diagram for explaining a method for manufacturing the separator.
Fig. 13 is a sectional view of a portion of the fuel cell having the separator packaged therein.
Fig. 14 is a perspective view schematically showing a fuel delivery pipe according to this invention.
Fig. 15 is a top plan view schematically showing the body portion in the manufacture process.
Fig. 16 is a diagram conceptionally showing a two-color molding machine in the delivery pipe.
Fig. 17 is a schematic view schematically showing a cover to be attached to that body portion.

### BEST MODE FOR CARRYING OUT THE INVENTION

This invention will be described on the basis of specific examples. This invention is directed to an electric product or electronic product having an electrically conducting portion, and this electrically conducting portion may be capable of feeding electrons and may be exemplified by either an electric path for feeding an electric power or an electric path for feeding an electric signal. Therefore, the electrically conducting portion is arranged in the mode in which an output portion and an input portion are connected, and the intermediate portion is electrically insulated. The entire shape is generally a thin wire shape similar to that of the prior conductors, to which this invention is not limited.

On the other hand, the aforementioned electric product or electronic product is constructed to execute a predetermined function, as assigned thereto, electrically, and includes not only an electric power unit and a signal transmitting unit or receiving unit but also a sensor for converting a physical quantity into an electric quantity, a converter for converting an electric signal into a signal of another mode such as an optical signal, and a power generating unit.

The electrically conducting portion in this invention is formed of a thermally plastic highly conductive resin. This highly conductive resin exhibits a fluidicity in its entirety when heated to a high temperature and has a volumetric resistivity as low as can be practically used, and is exemplified by a resin having a solder kneaded in an ABS resin. As the kneaded solder is the more, the volumetric resistivity becomes the lower so that the kneading property and the fluidicity are influenced. Therefore, the amount of kneaded solder may be determined according to the characteristics demanded. A suitable amount is exemplified by about 20 to 60 %. With this amount of kneaded solder, the volumetric resistivity is of the order of 10⁻⁵ Q cm.

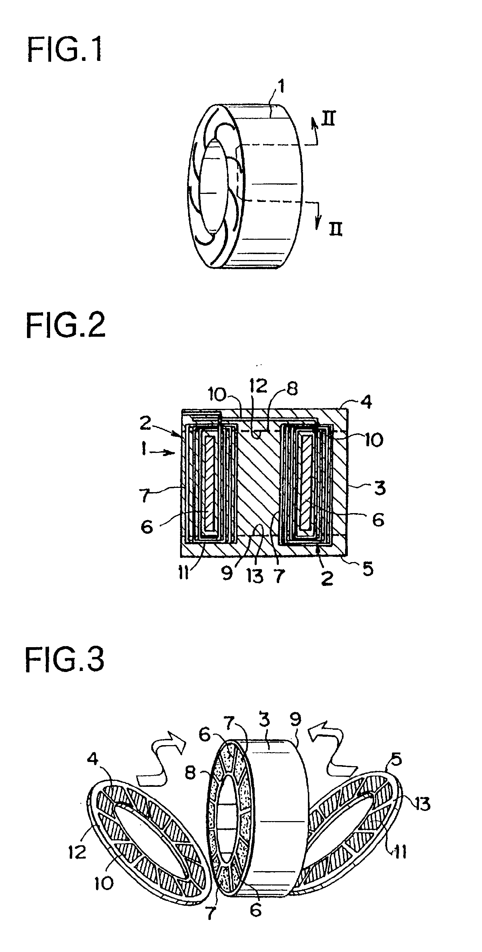

Figs. 1 to 3 show an AC motor stator 1 according to one example of an electric/electronic product according to this invention. Fig. 1 is a schematic perspective view; Fig. 2 is a sectional view taken along line II - II of Fig. 1; and Fig. 3 is a schematic exploded perspective view. As shown in these Figures, this stator 1 is formed in its entirety into an annular shape and is constructed by arranging a plurality of coils 2 equally in an annular shape.

More specifically, the stator 1 is constructed of a cylindrical body portion 3, and upper and lower cover portions 4 and 5 jointed to the two axial end portions of the body portion 3. This body portion 3 is constructed by forming a number of thinly linear conductors or electrically conducting portions 7 on the outer circumference of stator core 6 arranged in the axial direction, and by molding the entirety of a synthetic resin into a cylindrical shape. The stator core 6 is constructed by laminating thin electromagnetic steel sheets, for example, and a plurality of flat plate portions are protruded radially outward from the annular portion so that the electrically conducting portions 7 are arranged generally in parallel on the outer circumference of the flat shape protrusions as the cores.

On the other hand, the electrically conducting portions 7 are formed of the aforementioned highly conductive resin into the thin linear shape, and their individual two end portions are exposed to joint faces 8 and 9 or the axial end faces of the body portion 3. Moreover, these electrically conducting portions 7 are insulated from each other and individually form the linear electric paths for electric currents, which are arranged in the body portion 3 between the joint faces 8 and 9 and which are independent of each other.

On the other hand, the individual upper and lower cover portions 4 and 5 are formed in its entirety of an electrically insulating synthetic resin into thin sheets of an annular shape like the joint faces 8 and 9 so that they may be jointed to and integrated with the joint faces 8 and 9. In the individual cover portions 4 and 5, there are formed electrically conducting portions 10 and 11 of a thin linear shape, which are formed of the highly conductive resin and insulated from each other. Of these electrically conductive portions 10 and 11, the electrically conductive portions 11 formed in the lower cover 5 are conductive portions for the so-called "in-phase connections" and are connected with the end portions of the predetermined corresponding electrically conducting portions 7 of the stator core 6, as opposed to each other across the stator core 6, thereby to make the electrically conducting portions 7 electrically conductive with each other. As a result, the two end portions of the individual electrically conductive portions 11 in the lower cover 5 are exposed at such positions to a joint face 12 confronting the body portion 3 as to correspond to the exposed ends of the electrically conducting portions 7 in the body portion 3.

On the other hand, the other cover portion 4, i.e., the electrically conductive portions 10 in the upper cover 4 include electrically conducting portions for the in-phase connections and electrically conducting portions for inter-phase connections. Specifically, the electrically conducting portions for the in-phase connections are formed, like the aforementioned electrically conducting portions 11 in the lower cover 5, into a thin linear shape such that their two end portions are electrically insulated from each other while being exposed at positions corresponding to the exposed ends of the electrically conducting portions 7 in the body portion 3 to a joint face 13 confronting the body portion 3. Specifically, the individual end portions of the electrically conducting portions 7 in the body portion 3 are connected in-phase by the electrically conducting portions 10 and 11 in the individual cover portions 4 and 5 so that those electrically conducting portions 7, 10 and 11 construct as a whole one electric path, as wound around the stator core 6, i.e., the coil 2. On the other hand, the electrically conducting portions for the inter-phase connections are so formed in the upper cover 4 for the stator for a three-phase AC motor, for example, as to make every three coils 2 electrically conductive.

Here, the terminal portions for extracting the coils 2 of the individual phases electrically to the outside may be formed of the aforementioned highly conductive resin in either of the individual cover portions 4 and 5. Here will be described the relations between the aforementioned specific example and this invention. The aforementioned body portion 3 corresponds to a body portion of Claim 5; the internal electrically conducting portions 7 correspond to a first conductive portion in Claim 5; the individual cover portions 4 and 5 correspond to an end plate portion in Claim 5; and the internal electrically conducting portions 10 and 11 correspond to a second conductive portion in Claim 5.

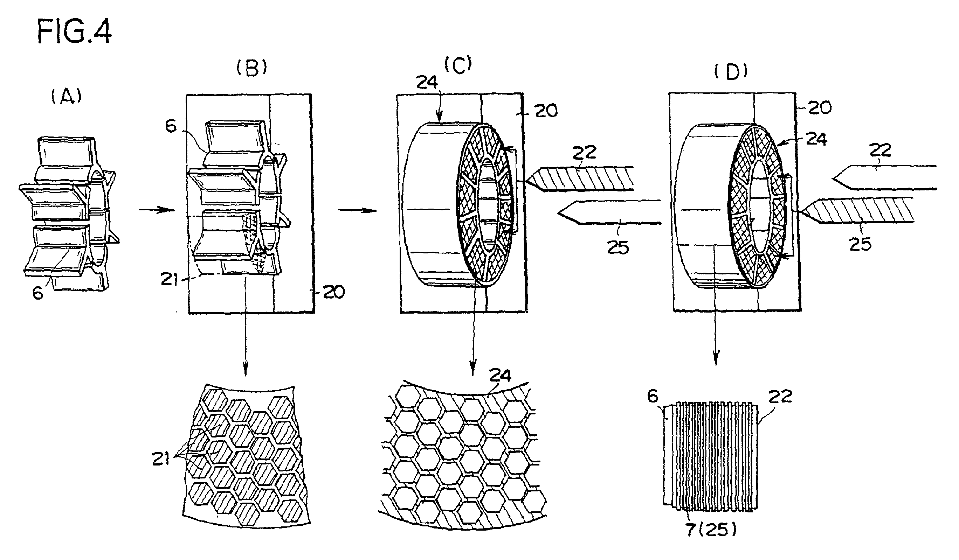

Here will be described a method for manufacturing the aforementioned stator 1. In this stator 1, all the electrically conducting portions 7, 10 and 11 for the electric current are formed of either a thermoplastic highly conductive resin or a highly conductive resin exhibiting a fluidicity while being molded and holds a rigidity after set, so that they can be manufactured by utilizing an insert molding by an injection molding. Figs. 4 (A), (B), (C) and (D) show a process for manufacturing the body portion 3 schematically. First of all, the integral type stator core 6, in which the plurality of flat sheet portion along the axial direction are radially protruded from the outer circumference of the annular portion, is formed by laminating electromagnetic steel sheets. Next, this stator core 6 is inserted and held in the cavity of a two-color molding die 20, and the die 20 is closed. In this case, in order to retain passages for the multiplicity of electrically conducting portions 7 in the space portion around the outer circumference of the stator core 6, linear portions 21 corresponding to the electrically conducting portions 7 are arranged as the so-called "cores". In this case, an insulating resin 22 is injected into the cavity.

The insulating resin, as injected into the cavity, is solidified after having flown into the space portion formed between the stator core 6 and the aforementioned linear members 21 as the cores, to produce a molding along the shape of the cavity. After this, the die 20 is opened to extract the linear members 21 as the cores. A portion of a molding 24 thus obtained is shown in Figs. 4 (A), (B), (C) and (D). In the shown example, the linear members 21 having a hexagonal section are employed as the cores, so that the linear space portion formed for injecting-molding the electrically conducting portions 7 is formed into a honeycomb shape.

When the linear members 21 as the cores are to be removed by opening the die, the molding 24 of the insulating resin 22 is left unchanged in its placed state in the die 20, and the linear members 21 are removed. After this removal, the die 20 is dosed again, and the aforementioned highly conductive resin 25 is then injected into the die 20 so that it may be molded. The highly conductive resin 25 thus injected into the die 20 flows to fill the cavity or space portion formed in the die 20 so that it solidifies. At this state, the cavity in the die 20 has the honeycomb shape, as formed by extracting the aforementioned linear members 21, of the multiplicity of linear space portions made independent of each other and extending through the two axial end faces of the molding 24. As a result, the highly conductive resin 25 is molded to solidify in the shape of the cavity to form the multiplicity of electrically conducting portions 7 insulated electrically from each other. Here, these electrically conducting portions 7 are contoured to accord to the shape of the cavity. In this example, the linear members 21 as the cores are arranged in and parallel to the stator core 6. Therefore, the electrically conducting portions 7 are formed and shaped across and generally parallel to the stator core 6 and are exposed at its two end portions to the two axial end face, i.e., the joint faces of the body portion 3.

Here, the linear members 21 as the aforementioned removable cores can also be replaced by slide cores generally of the same shape arranged in the molding die so that the hollow portions for the electrically conducting portions 7 may be formed of the slide cores. In this case, the slide cores may be driven by either a suitable cam mechanism disposed in the molding die or a hydraulic or electric actuator.

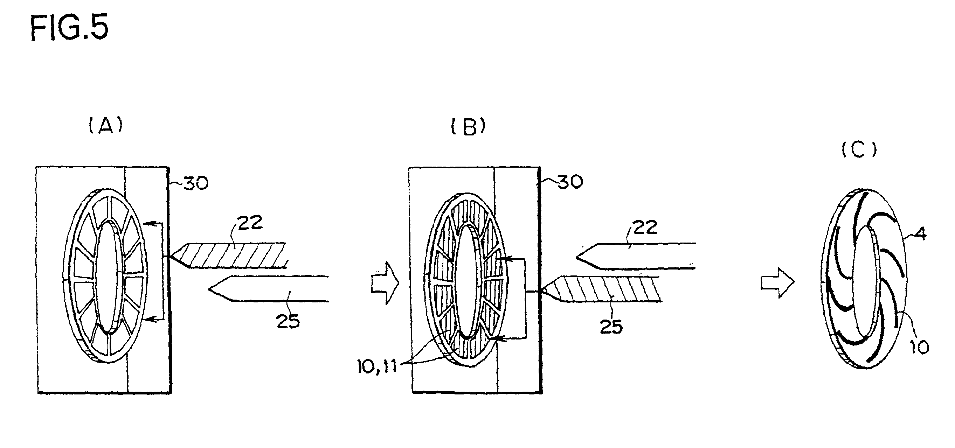

On the other hand, a process for manufacturing the aforementioned cover portions 4 and 5 is schematically shown in Figs. 5 (A), (B) and (C). These cover portions 4 and 5 can also be manufactured by the two-color molding method employing the insulating resin and the highly conductive resin. At first, there is prepared a two-color molding die 30 which is provided with a cavity having a shape corresponding to the entire shape of the cover portions 4 and 5. The insulating resin 22 is injected into the dosed die. Then, the highly conductive resin 25 is injected onto the face side corresponding to the joint face so as to form the aforementioned electrically conducting portions 10 and 11. For the upper cover 4, the highly conductive resin is injected onto the face opposed to the joint face (or the back face), to form the electrically conductive portion for the inter-phase connections.

The body portion 3 and the individual cover portions 4 and 5 thus formed are jointed at their joint faces, as described hereinbefore. Then, the two end portions of the electrically conducting portions 7 in the body portion 3 are electrically connected by the electrically conducting portions 10 and 11 of the cover portions 4 and 5 to form a plurality of coils 2 around the stator core 6 simultaneously. According to the methods shown in Figs. 4 (A), (B), (C) and (D) and Figs. 5 (A), (B) and (C), more specifically, the stator 1 having the coils can be manufactured by the two works, as roughly divided, of the injection molding work and the work of jointing the plurality of parts while eliminating the works of winding conductors annularly for forming the coil 2 or refining the shapes. By forming the sectional shape of the electrically conducting portions 7 in the aforementioned body portion 3 into a suitable shape such as a hexagonal shape or an octagonal shape, on the other hand, the sectional area of the coil 2 occupying that of the body portion 3 can be increased to improve the efficiency of the motor using the electrically conducting portions.

Here will be described the relations between the aforementioned method and this invention. The step shown in Fig. 4 (B) corresponds to the step in the invention of Claim 10 of inserting the linear members to dose the die; the step shown in (C) corresponds to the step of the invention of Claim 10 of injection-molding an insulating portion; and the step shown in (D) corresponds to the step of the invention of Claim 10 of injection-molding a highly conductive resin to form electrically conducting portions.

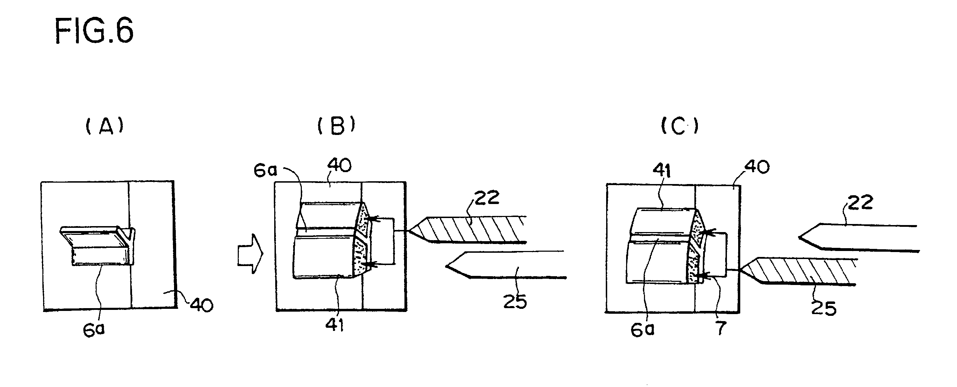

In the aforementioned example, there is employed the integral type stator core 6. In the method of this invention, the stator can be manufactured by employing a split type stator core. This example is schematically shown in Figs. 6 (A), (B) and (C). A split stator core 6a, as shown in Fig. 6 (A), is made by dividing the integral type stator core 6 shown in Figs. 4 (A), (B), (C) and (D) into the pole number and is provided with plate-shaped portions which protrude radially outward from the 1/6 arcuate portions and extend axially. This split stator core 6a is disposed in a two-color molding die 40, and this die 40 is dosed. In this state, an insert-molding is performed by injecting the insulating resin 22. At this step, on the two sides across the plate-shaped portion of the split stator core 6a, there is formed generally sector-shaped insulating portion 41 which involves a multiplicity of thin hollow portions directed in the axial direction. The hollow portions can be formed by forming the shape of the cavity into the one corresponding to the insulating portion 41. In order to retain the aforementioned hollow portions to be the electrically conducting portions for introducing the highly conductive resin, on the other hand, thin linear members extending in the axial direction may be arranged at the aforementioned insert-molding time, as in the aforementioned specific example, on the two sides across the aforementioned plate-shaped portion. The insulating portion 41 thus formed has the honeycomb shape, as shown in Figs. 4(A), (B), (C) and (D).

After the insulating portion 41 was injection-molded, as described above, the electrically conducting portions 7 are injection-molded in the same die 40 as the aforementioned one. With the insulating portion 41 being held at the same position as the aforementioned one, more specifically, the aforementioned highly conductive resin 25 is injected into that die 40. This highly conductive resin 25 flows to solidify in the hollow portions of the thin linear shape to form the electrically conducting portions 7 which are exposed at their individual end portions to the two axial end faces of the insulating portion 41, i.e., to the joint faces.

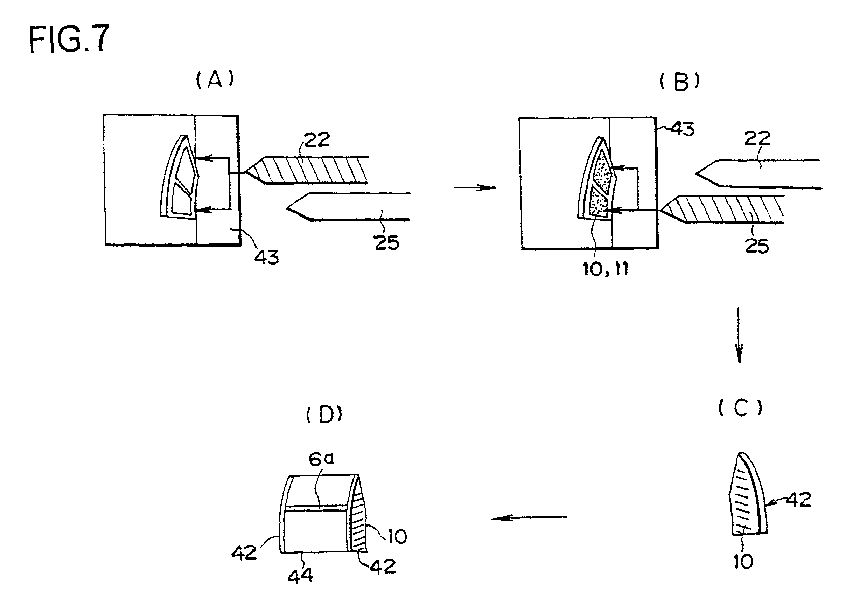

On the other hand, there are made upper and lower cover portions (or split covers) 42 which has a shape corresponding to that of the end faces (or the joint faces) of the aforementioned insulating portion 41. These cover portions 42 can be manufactured by the two-color molding method as in the case where the individual cover portions 4 and 5 are manufactured in the aforementioned specific example. As shown in Figs. 7 (A), (B), (C) and (D), more specifically, the insulating resin 22 is injected at first into a die 43 which has a cavity of the shape corresponding to the split covers 42 to be manufactured. Next, with the molding of the insulating resin being arranged in the die 43, the highly conductive resin 25 is injected to form the electrically conducting portion 10 on one face. This electrically conducting portion 10 corresponds to the electrically conducting portions 10 and 11 in the aforementioned cover portions 4 and 5 so that the two end portions of the electrically conducting portion 10 are so exposed to the joint faces as to correspond to the electrically conducting portion 7 in the aforementioned insulating portion 41. On the other face (or the back face) of one split cover 42 corresponding to the upper cover, the electrically conducting portion 11 for the inter-phase connections is formed of the highly conductive resin by the injection molding method.

The split covers 42 thus obtained are jointed to the two end faces of the aforementioned insulating portion 41 to make a split core 44. In the example shown herein, the split core 44 has coils of six poles so that it is a part of an arcuate length of 1/6. On the other hand, the aforementioned insulating portion 41 is provided with the multiplicity of electrically conducting portions 7 extending axially, whose end portions 7 are electrically connected by the electrically conducting portions 10 formed in the split covers 42 to construct the coil or one continuous electric path as a whole.

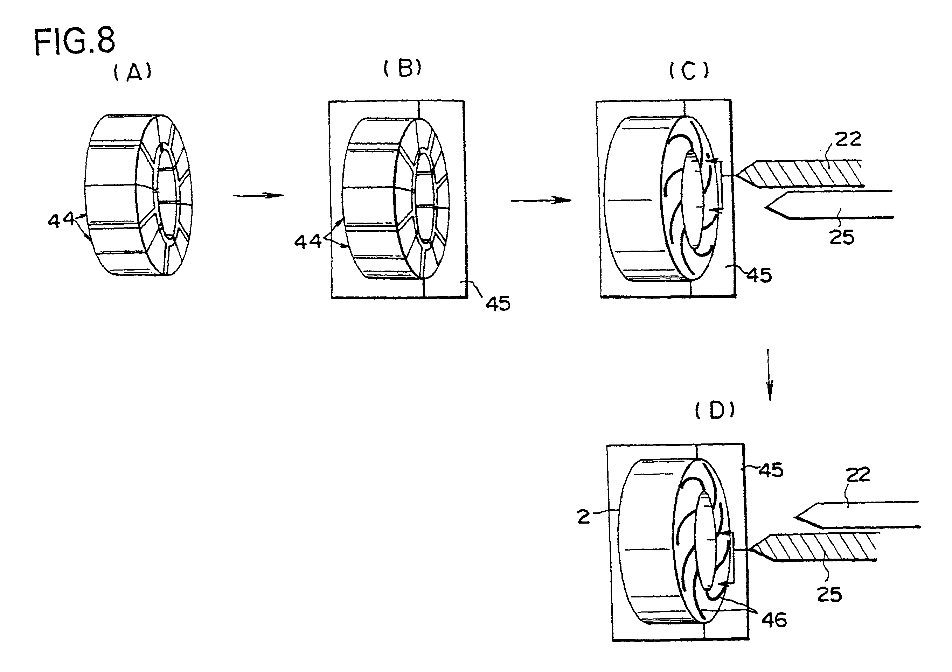

The six split cores 44 thus manufactured are prepared and arrayed on a circumference, as shown in Figs. 8 (A), (B), (C) and (D), so that they form the annular stator core 2 as a whole. Specifically, the six split cores 44, as annularly arranged, are arranged at a small clearance inbetween in an injection-molding die 45, and the insulating resin 22 is injected into the die 45. As a result, the insulating resin flows into the clearances between the individual coils to effect the inter-phase insulation and to integrate the entirety. In this case, the spaces for the inter-phase connections are retained by the die 45 or a suitable filler. After this, the highly conductive resin 25 is injected into the spaces for the inter-phase connections to form electrically conducting portions 46 for the inter-phase connections.

Any of the aforementioned methods is to form the continuous coils as a whole by connecting the electrically conducting portions, as formed on the two sides across the stator core, at the electrically conducting portions formed in the cover portions to be jointed to the two axial end portions of the former electrically conducting portions. In this invention, however, the coils can also be directly formed by the highly conductive resin. Here will be described this example in the following. The method to be described is the so-called "lost core method" in which the member corresponding to the core for the electrically conducting portions is lost.

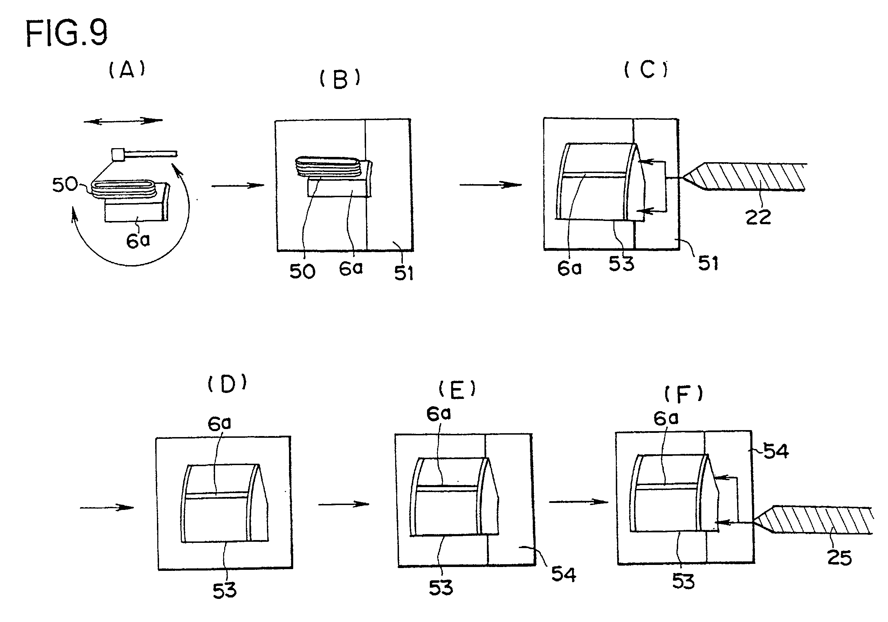

First of all, the six split stator cores 6a are prepared, as shown in Figs. 9 (A), (B), (C), (D), (E) and (F), and are individually wound in a coil shape with a thin wire of an alloy of a low melting point to form a lost core 50. This lost core 50 is made of an alloy having a melting point slightly higher than the injection-molding temperature of the aforementioned insulating resin 22, for example, and is insulating-coated with the same material as the insulating resin 22.

The split stator core 6a having the aforementioned lost core 50 formed is placed in an injection-molding die 51, and the insulating resin 22 is injected into the die 51 to form an insulating portion 53. This insulating portion 53 is formed into a shape similar to the aforementioned insulating portion 41, as shown in Figs. 6 (A), (B) and (C). Moreover, the lost core 50 is exposed at its end portion to the outside.

The insulating portion 53 thus obtained is extracted from the die 51 and is heated to a temperature higher than the melting point of the lost core 50. As a result, the lost core 50 is molten away to form the coil-shaped hollow portion in the insulating portion 53. Next, the insulating portion 53, from which the lost core 50 has been molten away, i.e., the insulating portion 53 having the coil-shaped hollow portion is placed in an injection-molding die 54, and the highly conductive resin 25 is injected into the mold 54. The highly conductive resin 25 flows to fill up the coil-shaped hollow portion in the insulating portion 53 and solidifies to form the electrically conducting portion. In short, the coil is formed of the highly conductive resin.

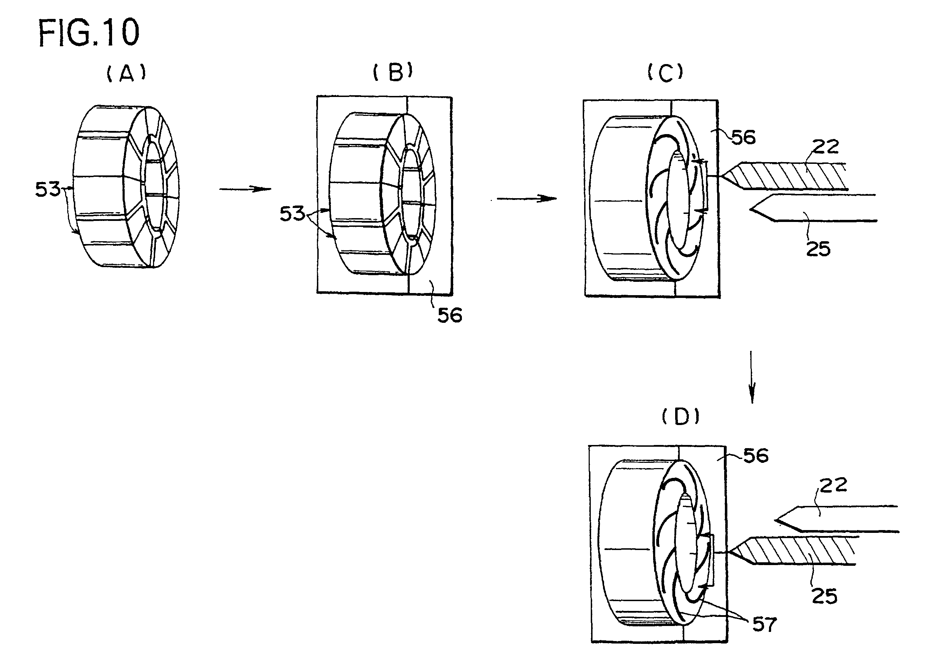

The six split cores 55 thus formed are prepared and arrayed at a slight clearance inbetween in an annular shape, as shown in Figs. 10 (A), (B), (C) and (D), and are hold as they are in an injection-molding die 56. The insulating resin 22 is injected into the die 56. As a result, the insulating resin flows into the clearances between the individual coils to effect the inter-phase insulation and to integrate the entirety. In this case, the spaces for the inter-phase connections are retained by the die 56 or a suitable filler. After this, the highly conductive resin 25 is injected into the spaces for the inter-phase connections to form electrically conducting portions 57 for the inter-phase connections. This process, as shown in Figs. 10 (A), (B), (C) and (D), is similar to the forming process shown in Figs. 8 (A), (B), (C) and (D).

By the aforementioned so-called "split core two-color molding junction method", as shown in Figs. 6 (A), (B) and (C) to Figs. 8 (A), (B), (C) and (D) or the so-called "lost core integral two-color molding method", as shown in Figs. 9 (A) to (F) and Figs. 10 (A), (B), (C) and (D), too, the coils or the stator core having the coils can be manufactured by a method which is composed mainly of the injection molding of a resin. In this case, the manual work such as the final reforming work, as has been indispensable in the prior art, can be eliminated to improve the manufacturing workability.

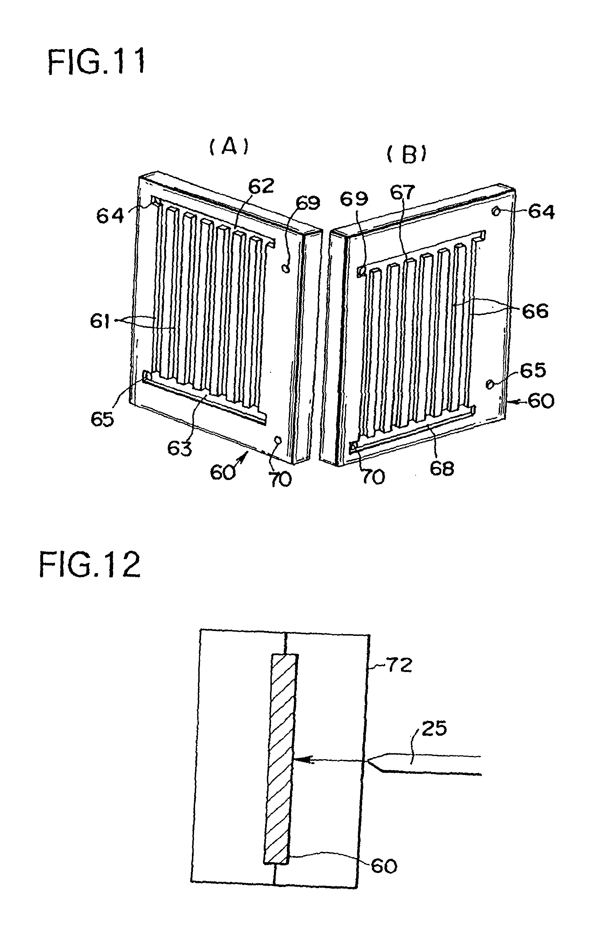

Moreover, this invention can be applied a separator for fuel cells. One example of the separator 60 is shown in Figs. 11 (A) and (B). Specifically, this separator 60 is formed in its entirety into a flat plate shape. On one face (as shown in Fig. 11 (A)), there are formed a plurality of vent grooves 61 in parallel with each other, and an intake groove 62 and an exhaust groove 63 to function as headers for causing the individual grooves 61 to communicate with each other are formed in the longitudinal end portions of the vent grooves 61 and in a direction perpendicular to those vent grooves 61. In one end portion of the intake groove 62, moreover, there is formed an intake port 64 which extends in the thickness direction of the separator 60. In one end portion of the exhaust groove 63, too, there is likewise formed a through exhaust port 65.

In the other face (as shown in Fig. 11 (B)), on the other hand, there are formed a plurality of vent grooves 66 which are directed perpendicularly of the aforementioned vent grooves 61 and in parallel with each other. At the two longitudinal end portions of those vent grooves 66, there are formed an intake groove 67 and an exhaust groove 68 which are formed perpendicularly of those vent grooves 66 for causing the vent grooves 66 to communicate with each other. At one end portion of the intake groove 67 and at a position to have no interference (or communication) with any of the grooves formed in the aforementioned one face, there is formed an intake port 69 which extends in the thickness direction through the separator 60. At one end portion of the exhaust groove 63 and at position to have no interference (or communication) with any of the grooves formed in said one face, on the other hand, there is likewise formed a through exhaust port 70. Here, not only the intake port 64 but also the exhaust port 65 are also formed at positions to have no interference (or communication) with the individual grooves 66, 67 and 68 formed in the other face.

Therefore, the individual grooves 62, 61 and 63, as formed in one face, form gas passages from the intake port 64 to the exhaust port 65, and the individual grooves 67, 66 and 68, as formed in the other face, form gas passages from the intake port 69 to the exhaust port 70. Moreover, the individual ports 64, 65, 69 and 70 do not communicate with the grooves in the face on the opposite side. Therefore, the gas passages in the individual faces do not communicate but are independent of each other so that they can pass different gases simultaneously. Here, the aforementioned intake ports 64 and 69 and the intake grooves 62 and 67 communicating with the former correspond to an intake portion in Claim 7, and the aforementioned exhaust ports 65 and 70 and the exhaust grooves 63 and 68 communicating with the former correspond to an exhaust portion in Claim 7.

Moreover, this separator 60 is formed of the aforementioned highly conductive resin. Specifically, the separator 60 can be manufactured, as shown in Fig. 12, by injecting the highly conductive resin into a molding die 72 which is provided with protrusions, projections or cores at portions corresponding to the aforementioned individual grooves or ports.

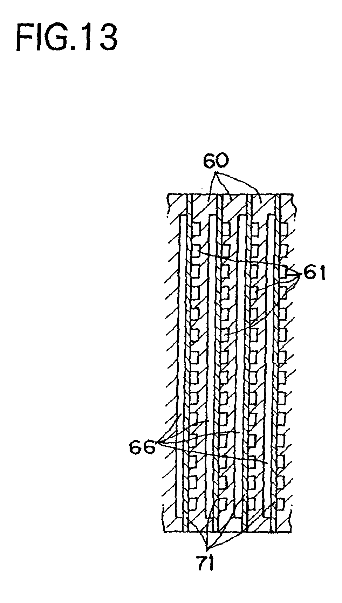

Fig. 13 shows the employing mode of the separator 60 schematically. This separator 60 is employed in a solid high-molecular type fuel cell, for example, so that a fuel cell stack is made by arranging the separators 60 across an electrolytic film 71 of proton permeable high molecules and by arranging a multiplicity of arrangements in series. On the surfaces of the electrolytic film 71, there are mounted electrodes of a porous structure having catalytic particles of platinum. The individual separators 60 are brought into close contact with the electrodes. Therefore, the individual grooves 61, 62, 63, 66, 67 and 68 in the separator 60 are closed at their open ends with the electrolytic film 71 to form tunnel-shaped gas passages. In this state, a fuel gas such as hydrogen gas is fed to the passages on the side of a fuel electrode, and an oxidizing gas such as air is fed to the passages on the opposite side of an air electrode. Then, simultaneously as the protons, as produced by the electrolytic dissociations of hydrogen, migrate through the electrolytic film 71 to the air electrode side, the electrons are extracted from the fuel electrodes to the outside. In short, there is generated an electromotive force.

The fuel cell is constructed by arraying a multiplicity of single cells in series as are composed of the paired separators 60 and the sandwiched electrolytic film 71. However, the separators 60 are made of the highly conductive resin and have a low weight so that the weight of the fuel cell as a whole can be reduced. On the other hand, the separators can be manufactured by the injection molding method to improve the manufacturing workability.

Here, the separator 60 is formed into the flat plate shape as a whole so that it can be manufactured by pressing a sheet material of a highly conductive resin. If the grooves in the front and back sides are formed to have no communication, as described above, there is manufactured the separator for connecting the fuel cells in series. This invention should not be limited thereto but may be constructed such that the grooves in the front and back sides are made to communicate through the intake ports and the exhaust ports and are individually fed with gases of identical kinds. The separator of this construction can be employed in the case where the single cells are connected in parallel to construct the stack. On the other hand, the electrolyte of the fuel cells should not be limited to the aforementioned solid high-molecular film.

Although this invention has been described hereinbefore on its specific example, it should not be limited thereto but can be further applied to another electric/electronic product. For example, the electrically conducting portions for generating the heat in a heater to act at a relatively low temperature or the electrically conducting portions for feeding an electric power to an exothermic element can be made of a highly conductive resin, and the contact portions of connectors or switches can be molded of the highly conductive resin. This invention can be further applied to a product having a rod antenna or a printed type antenna made of the highly conductive resin, a product having a circuit formed of the highly conductive resin directly on the inner face of a casing, or an electromagnetic clutch having a coil portion made of the highly conductive resin. Still moreover, this invention should not be limited to the stator of the motor but can also be applied to a rotor provided with coils.

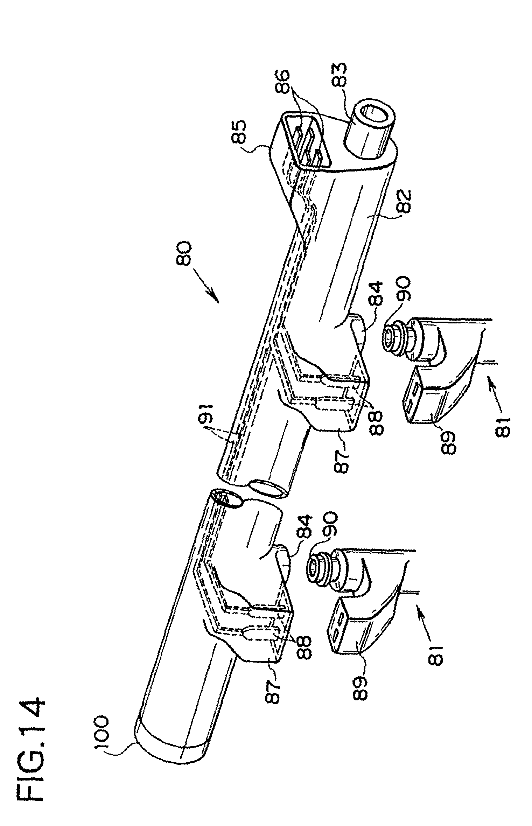

Here will be described another example of the product according to this invention. Fig. 14 schematically shows a fuel delivery pipe (as will be shortly referred to the "delivery pipe") 80 according to this invention. This delivery pipe 80 is a product, to which an injector 81 prepared for each of the (not-shown) cylinders of an engine is attached, to feed the fuel to the individual cylinders through the injectors 81. The delivery pipe 80, as shown in Fig. 14, is provided with a pipe-shaped body portion 82, which is provided at its one end portion with a joint portion 83 for connecting the not-shown fuel pipe. In a plurality of portions of the body portion 82 at a predetermined axial spacing, on the other hand, there are formed port portions 84 for fitting the injectors 81. Here, the body portion 82 has its other end portion closed or constructed to connect the (not-shown) return pipe.

At the end portion on the side of the aforementioned joint portion 83, there is formed an engine wire side connector portion 85 integrally with the body portion 82. In the example shown in Fig. 14, the engine wire side connector portion 85 is formed into a rectangular hollow shape, in which a plurality of metallic terminals 86 of a number corresponding to that of the injectors 81 are arrayed and fixed in a predetermined mode. In the vicinity of the aforementioned individual port portions 84, on the other hand, there are formed injector side connector portions 87 integrally with the body portion 82. In the injector side connector portion 87, there are arrayed and fixed at least two metal terminals 88 for an anode and a cathode in a predetermined mode. Here, the relative positions between the injector side connector portion 87 and the port portion 84 coincide with those between a connector portion 89 and a joint portion 90 in the injector 81 to be attached thereto, and the array of the individual metal terminals 88 coincides with that of the terminals of the connector portions 89 in the injector 81. By fitting the joint portion 90 of the injector 81 in the port portion 84, therefore, the terminals of the injector side connector portions 87 and 89 of each connector portion come into contact and become conductive.

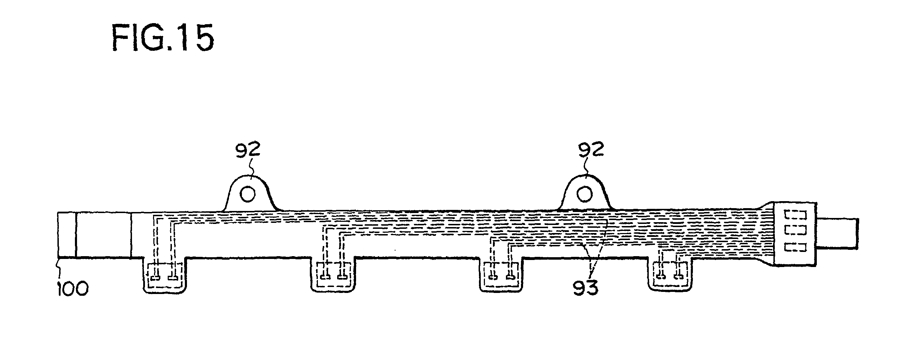

The metal terminal 86 of the engine wire side connector portion 85 and the metal terminal 88 of the injector side connector portion 87 of the aforementioned delivery pipe 80 are connected in a one-to-one relation by a plurality of thin linear electrically conducting portions 91. The aforementioned body portion 82 is made of an insulating synthetic resin, but those electrically conducting portions 91 are made of the highly conductive resin which has been described in the aforementioned specific example. Here, these electrically conducting portions 91 are formed while being substantially buried in the body portion 82. With this body portion 82, on the other hand, there are integrally formed collar portions 92 to be fixed on the engine by means of bolts, as shown in Fig. 15.

Here will be described a method for manufacturing the aforementioned delivery pipe 80. In this delivery pipe 80, the components other than the metal terminals 86 and 88 are made of a synthetic resin so that the delivery pipe 80 can be manufactured by the insert molding method or the two-color molding method. By arranging metal strips for the metal terminals at predetermined positions in one cavity of a two-color molding die and by injecting a synthetic resin for the body portion 82 into a cavity, more specifically, there is injection-molded the body portion 82 which is integrally provided with the joint portion 83, the port portions 84, the engine wire side connector portion 85 and the color portions 92. The body portion 82 in this intermediate state is schematically shown in Fig. 15, and thin grooves 93 are so formed from the individual metal terminals 86 in the engine wire side connector portion 85 to the individual metal terminals 88 in the injector side connector portion 87 as to connect those metal wires 86 and 88 with each other. Therefore, the individual metal terminals 86 and 88 are exposed at their rear end portions to the outside. Next, the molding die is changed to inject the highly conductive resin into the aforementioned thin grooves 93 thereby to mold the electrically conducting portions 91. Thus, the anode terminals and the cathode terminals are made conductive with each other.

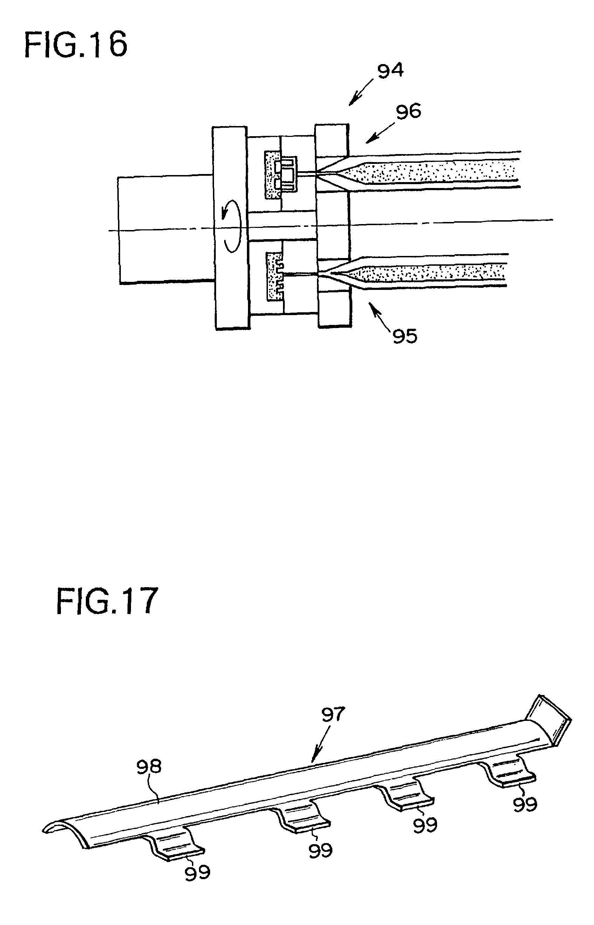

For molding the aforementioned body portion 82 and electrically conducting portions 91, it is possible to use a rotary die type two-color injection molding machine 94, as shown in Fig. 16. In this molding machine 94, the body portion 82 can be formed at a first molding station 95, and the electrically conducting portions 91 can be molded at a second molding station 92, so that the body portion 82 and the electrically conducting portions 91 can be simultaneously molded.

In the body portion 82 having the electrically conducting portions 91 thus far molded, the electrically conducting portions 91 are exposed to the outside. In order to shield the electrically conducting portions 91, therefore, a cover 97, as manufactured and prepared at another step, is attached to the outer surface of the body portion 82. One example of this cover 97 is schematically shown in Fig. 17. An arcuate sectional portion 98 covering a portion of the outer surface of the body portion 82 is integrated with a plurality of cap portions 99 which are so protruded from the side portion of the arcuate sectional portion 98 as to cover the upper portion of the injector side connector portion 87. That cover 97 can be made of the same resin as that of the body portion 82 so that the joint between the body portion 82 and the cover 97 can be effected by an adhesive for a general synthetic resin or by a fusion. Here in the case of a die structure in which the core for making the body portion 82 into a hollow structure is inserted from the end portion on the side opposed to the joint portion 83, the end portion, as located on the side opposed to the joint portion 83, of the body portion 82 to be molded is opened. In order to dose this opening, a suitable cover 100 is attached to the other end portion of the body portion 82.

Therefore, the aforementioned delivery pipe 80 is molded of the synthetic resin in its entirety excepting the small metal terminals 86 and 88 so that it can be made light. Moreover, the electrically conducting portions 91, as made thin and lowly rigid and bent, can be formed of the highly conductive resin by the ordinary resin molding method without resorting to the insert molding method so that the productivity is excellent. As a result, it is possible to provide the lightweight delivery pipe at a low cost.

Here, the various kinds of products having the electrically conducting portions in the surface layer of the body portion can be given a construction similar to that of the aforementioned delivery pipe, and the aforementioned molding method can be adopted as their manufacturing method. For example, the shaft member for a post or frame having the electrically conducting portions can be constructed such that the body portion is made of the insulating synthetic resin and such that its surface layer is provided with the electrically conducting portions made of the highly conductive resin. Moreover, the body portion and the electrically conducting portions can be continuously injection-molded by the two-color molding method.

Here will be synthetically described the effects to be obtained by this invention.

According to the invention of Claim 1, as has been described hereinbefore, the electrically conducting portions are made of the resin so that the product can be made lightweight, and the electrically conducting portions can be formed by the general resin molding method such as the injection molding method to improve the manufacture workability.

According to the invention of Claim 2, on the other hand, the coil portions or the electrically conducting portions can be made of a resin by the general resin molding method such as the injection molding method, so that the product can be made lightweight and so that its manufacture workability can be improved.

According to the invention of Claim 3, the coils are made by jointing a part having a multiplicity of linear electrically conducting portions made of the highly conductive resin and insulated from each other and another part having a multiplicity of electrically conducting portions made of the highly conductive resin for connecting the linear electrically conducting portions, so that the product having the coils can be made lightweight and so that the coils can be easily manufactured to improve the manufacture workability of the product.

According to the invention of Claim 4, the coil portions of the stator or the rotor of the motor can be made lightweight of a resin to improve their manufacture workability.

According to the invention of Claim 5, the coils having the electrically conducting portions around the core can be manufactured by jointing a plurality of parts, and the electrically conducting portions or the circuit is made of the highly conductive resin. Therefore, the manual works at the time of manufacturing the coil can be eliminated to improve the manufacture workability, and the product can be made lightweight.

According to the invention of Claim 6, the portions in the separator for a fuel cell, i.e., the portions to conduct to the electrodes can be made of the resin so that the separator can be made lightweight.

According to the invention of Claim 7, the separator of the fuel cell can be made lightweight of the resin and can be manufactured by the general molding method of the synthetic resin such as the injection-molding method thereby to improve the manufacture workability.

According to the invention of Claim 8, 9 or 10, moreover, the electrically conducting portions or the coil portions are formed by introducing the highly conductive resin into a hollow portion of a predetermined shape, As this method, there can be adopted the general resin molding method such as the injection molding method thereby to improve the manufacture workability of the product.

According to the inventions of Claim 11 to 13, moreover, the product, as provided with the electrically conducting portions around the shaft-shaped body portion such as the fuel delivery pipe, can be made lightweight to improve the manufacture workability thereby to lower the cost.

### INDUSTRIAL APPLICABILITY

This invention can be utilized in various industries for manufacturing and employing a product having electrically conducting portions for transmitting an electric power or an electric signal and is useful in the industry which is required to make metal products of a resin to reduce the weight and lower the cost.

## Claims

1. A product which has electrically conducting poisons, **characterized in that** said electrically conducting portions are made of a highly conductive resin.

2. A product as set forth in Claim 1, **characterized in that** said electrically conducting portions are coils having an electric path formed helically on an axis for passing an electric current.

3. A product as set forth in Claim 1, **characterized: by** comprising a plurality of parts having a multiplicity of linear electrically conducting portions made of a highly conductive resin and exposed at their two end portions to joint faces; and in that said parts are so jointed that the end portions of the electrically conducting portions, as exposed to the joint faces, are made electrically conductive with the end portions of the electrically conducting portions of mating parts thereby to form continuous coils.

4. A product as set forth in Claim 2, **characterized in that** said coils construct a stator or rotor of a motor.

5. A product as set forth in Claim 1, **characterized: in that** said electrically conducting portions are coils wound in multiple turns around a core arranged in the axial direction for forming an electric path; **in that** said coils are equidistantly arranged in the circumferential direction on said axis; and **in that** each of said coils includes: a body portion extending in parallel with said core and having a multiplicity of first electrically conducting portions insulated from each other and exposed at its two end portions to the two axial end joint faces; and end plate portions jointed to the two axial end portions of said body portion and having second electrically conducting portions insulated from each other and made electrically conductive to the exposed end portions of the first electrically conducting portions for connecting said first electrically conducting portions with one continuous circuit.

6. A product as set forth in Claim 1, **characterized: in that** said product is a separator made electrically conductive with one of two electrodes across an electrolyte; and **in that** the portion, as made conductive with said electrode, of said separator is said electrically conducting portions made of the highly conductive resin.

7. A product as set forth in Claim 1, **characterized: in that** said electrically conducting portions are a separator for a fuel cell having electrodes arranged on its surface and arranged across an electrolyte; **in that** said separator is formed into a flat plate shape having a plurality of vent grooves formed in its two front and back faces and in the facial direction; **in that** said one face has an intake portion formed therein communicating with one end portion of each of said vent grooves formed in said one face, and an exhaust portion formed therein and communicating with the other end portion, whereas said other face has an intake portion formed therein and communicating with one end portion of each of said vent grooves formed in said other face and an exhaust portion formed therein and communicating with the other end portion.

8. A method for manufacturing a product having electrically conducting portions, **characterized in that** said electrically conducting portions are formed by making a highly conductive resin fluid into a shape corresponding to said electrically conducting portions and then by causing the highly conductive resin to solidify.

9. A product manufacturing method as set forth in Claim 8, **characterized: in that** said electrically conducting portions are formed in a plurality of parts to be jointed to each other and in a state in which the end portions are exposed to the joint faces of said parts; by pouring the highly conductive resin into a linear shape and solidifying it and **in that** said parts are so jointed that the end portions of the electrically conducting portions, as exposed to the joint faces, are made electrically conductive with the end portions of the electrically conducting portions of mating parts thereby to form continuous coils.

10. A product manufacturing method as set forth in Claim 8, **characterized by** comprising: a step of inserting a multiplicity of linear members separately of each other into a molding cavity and dosing a molding die; a step of forming an insulating portion by injecting an electrically insulating resin into the cavity; and a step of forming said electrically conducting portions insulated from each other, by removing said linear members and closing the die again and then by injecting said highly conductive resin into a hollow portion formed by said linear members.

11. A product as set forth in Claim 1, **characterized in that** the electrically conducting portions of said highly conductive resin are formed while being buried in the surface layer of a body portion of a hollow or solid shaft shape.

12. A product as set forth in Claim 11, **characterized: in that** said body portion formed into a pipe shape and is provided at its predetermined portion with a connector portion having metal terminals; and **in that** said electrically conducting portions are made conductive with the metal terminals.

13. A product as set forth in Claim 12, **characterized: in that** said body portion is provided at its predetermined portion with a port portion for communicating with the inside of said body portion; and **in that** said connector portion is disposed in the vicinity of said port portion.
